# EUROPÄISCHE PATENTSCHRIFT

(11) **EP 1 420 983 B1**
(45) Veröffentlichungstag und Bekanntmachung des Hinweises auf die Patenterteilung: **05.04.2006**
(21) Anmeldenummer: 02701180.8
(22) Anmeldetag: 10.01.2002
(51) Int. Cl.: B60R 21/01

(54) **VERFAHREN ZUR AUSLÖSUNG WENIGSTENS EINES AIRBAGS IN EINEM FAHRZEUG**
METHOD FOR TRIGGERING AT LEAST ONE AIRBAG IN A VEHICLE
PROCEDE PERMETTANT DE DECLENCHER AU MOINS UN SAC GONFLABLE D'UN VEHICULE AUTOMOBILE

(30) Priorität: 24.02.2001 DE 10109043
(43) Veröffentlichungstag der Anmeldung: 26.05.2004
(73) Patentinhaber: ROBERT BOSCH GMBH, 70442 Stuttgart (DE)
(72) Erfinder: BENTELE-CALVÖR, Stephan, 70499 Stuttgart (DE); OSWALD, Klaus, 73240 Wendlingen (DE); GROTENDIEK, Torsten, 74321 Bietigheim (DE); MINDNER, Klaus, 73728 Esslingen (DE); LOECKLE, Gerhard, 71634 Ludwigsburg (DE); GATZWEILER, Barbara, 71254 Ditzingen (DE)
(86) Internationale Anmeldenummer: PCT/DE2002/000050
(87) Internationale Veröffentlichungsnummer: WO 2002/068246

(56) Entgegenhaltungen:
- EP-A- 1 034 985
- WO-A-01/98117
- DE-A- 19 938 891

## Beschreibung

### Stand der Technik

Die Erfindung geht aus von einem Verfahren zur Auslösung von wenigstens einem Airbag in einem Fahrzeug nach der Gattung des unabhängigen Patentanspruchs.

Es ist bereits bekannt, zweistufige Airbags zu verwenden, wobei selbst stufenlos schaltbare Airbags möglich sind.

Aus EP 1 034 985 A2 ist es bereits bekannt, Rückhaltemittel in mindestens zwei Stufen in Abhängigkeit von erfassten Ist-Werten und einem ermittelten Sollzustand des Fahrverhaltens auszulösen oder andere der Rückmittelsteuereinheit zur Verfügung gestellten Informationen. Damit kann auf fahrdynamisch unterschiedlich kritische Situationen angepasst reagiert werden.

### Vorteile der Erfindung

Das erfindungsgemäße Verfahren zur Auslösung von wenigstens einem Airbag in einem Fahrzeug mit den Merkmalen des unabhängigen Patentanspruchs hat demgegenüber den Vorteil, dass mindestens zwei Kriterien erfüllt sein müssen, um die zweite Stufe des Airbags vorzeitig zu zünden. Dabei sind verschiedene der mindestens zwei Kriterien möglich, beispielsweise eine Und-Verknüpfung, die eine größere Sicherheit mit sich bringt, dass es sich wirklich um eine Auslösesituation handelt, oder eine Oder-Verknüpfung, die eine größere Sicherheit ermöglicht, dass eine Auslösesituation mit hoher Wahrscheinlichkeit erkannt wird. Damit wird die Erkennung von einem Aufprall mit großer Unfallschwere sicherer und damit auch der Einsatz des entsprechenden mehrstufigen Airbags. Insbesondere ist dabei überprüfbar, dass die zwei Kriterien rechtzeitig erfüllt sein müssen. Bei einem Aufprall mit geringer Unfallschwere ist dabei dann ein Kriterium als Ausschlußkriterium nutzbar. Damit ist es möglich, dass die zweite Stufe des zweistufigen Airbags nach einer vorgegebenen Maximalzeit gezündet wird, um so den Effekt des zweistufigen Airbags abzumildern. Das Maß Kraft pro Zeit wird damit kleiner. Außerdem ist dabei zu beachten, dass bei einem Zünden der zweiten Stufe nach einer längeren Zeit es bereits zu einem Rückfluß des Gases kommt, so dass auch daher die zweite Stufe abgemildert wird. Insgesamt ist eine schärfere Trennung zwischen einstufigen und zweistufigen Einsätzen von einem Airbag bei Unfällen durch das erfindungsgemäße Verfahren möglich.

Durch die in den abhängigen Ansprüchen aufgeführten Maßnahmen und Weiterbildungen sind vorteilhafte Verbesserungen des im unabhängigen Patentanspruch angegebenen Verfahrens zur Auslösung von wenigstens einem Airbag in einem Fahrzeug möglich.

Besonders vorteilhaft ist, dass die Kriterien zur Ansteuerung des wenigstens zweistufigen Airbags in Abhängigkeit vom Fahrzeugtyp ausgewählt werden. Damit werden die jeweils geeigneten Kriterien für den jeweiligen Fahrzeugtyp ausgewählt, so dass ein optimaler Einsatz des wenigstens einen Airbags möglich ist.

Weiterhin ist es von Vorteil, dass als die geeigneten Parameter, die die Kriterien bilden, die vom Beschleunigungssensor abgeleiteten Größen wie Beschleunigung in und quer beziehungsweise winklig zur Fahrrichtung, die entsprechenden integrierten Beschleunigungen, Doppelintegrale der Beschleunigungen und Kombinationen von solchen Beschleunigungen in gungen in und quer beziehungsweise winklig zur Fahrrichtung ausgewählt werden, wobei durch Crashtests, empirische Daten und Simulationen die geeigneten Parameter für die Bildung der Kriterien ausgewählt werden.

Es ist auch von Vorteil, dass die zweite Stufe des Airbags nach einer vorgegebenen Restzündungszeit bei einem Einsatz des Airbags immer gezündet wird, so dass die Wirkung eines zweistufigen Airbags damit abgemildert wird.

Des weiteren ist es von Vorteil, dass die Schwellwerte als Kennlinien ausgebildet sind, so dass dann auch auf entsprechende Crashverläufe durch die geeignete Wahl der Kennlinien eingegangen werden kann. Es ist damit ein adaptives Verhalten der Schwellwerte auf einen Unfall im zeitlichen Verlauf des Unfalls möglich.

Es ist auch von Vorteil, dass die Verwendung eines Gurtes Einfluß auf die Kennlinien nimmt, so dass in Abhängigkeit davon der Airbag entsprechend gezündet wird. Damit wird ein Zusammenspiel von Gurt und Airbag bei dem Personenschutz berücksichtigt. Liegt keine Verwendung eines Gurtes vor, dann sind Airbags entsprechend bei niedrigeren Beschleunigungen bereits zu zünden, da dann die ganze Rückhaltekraft vom Airbag bereitgestellt werden muß. Daher ist in einem solchen Fall der entsprechende Schwellwert abzusenken, so dass bereits bei einem Parameter ein Auslösesignal erzeugt wird als bei der Verwendung eines Gurtes.

Schließlich ist es auch von Vorteil, dass eine Vorrichtung zur Durchführung des erfindungsgemäßen Verfahrens vorliegt, die Beschleunigungssensoren, einen Prozessor, Speicher und Verbindungen zu Rückhaltemitteln aufweist, um das erfindungsgemäße Verfahren durchführen zu können. Dabei kann es in einer Weiterbildung vorgesehen sein, dass Beschleunigungssensoren getrennt vom Airbagsteuergerät im Fahrzeug angeordnet sind, beispielsweise als Upfrontsensoren, also solche Sensoren, die in der Fahrzeugfront angeordnet sind, also möglichst nahe bei einem Frontaufprall.

### Zeichnungen

Ausführungsbeispiele der Erfindung sind in der Zeichnung dargestellt und werden in der nachfolgenden Beschreibung näher erläutert. Es zeigt Figur 1 ein Blockschaltbild der erfindungsgemäßen Vorrichtung, Figur 2 ein Blockdiagramm des erfindungsgemäßen Verfahrens, Figur 3 die Auslösefallszenarien, Figur 4 ein erstes Geschwindigkeits-Zeit-Diagramm des X-Integratorverlaufs, Figur 5 ein zweites Geschwindigkeits-Zeit-Diagramm des X-Integratorverlaufs, Figur 6 ein drittes Geschwindigkeits-Zeit-Diagramm des X-Integratorverlaufs, Figur 7 ein viertes Geschwindigkeits-Zeit-Diagramm des X-Integratorverlaufs, Figur 8 ein fünftes Geschwindigkeits-Zeit-Diagramm des X-Integratorverlaufs und Figur 9 ein sechstes Geschwindigkeits-Zeit-Diagramm des X-Integratorverlaufs.

### Beschreibung

Ein mehrstufiger Airbag, hier insbesondere ein zweistufiger Airbag, soll gemäss der Unfallschwere gezündet werden. Erfindungsgemäß werden hier zwei Kriterien verwendet, um miteinander verknüpft zu werden. Im Ausführungsbeispiel sind die Kriterien gleich gewichtet. Durch eine logische UND-Verknüpfung soll eine Entscheidung herbeigeführt werden, ob und wann die zweite Airbagstufe gezündet werden soll. Es ist weiterhin möglich, dass drei oder mehr Kriterien verwendet und/oder andere Verknüpfungen der Kriterien eingesetzt werden. Zu solchen Verknüpfungen zählen eine Oder-, eine NAND und weitere logische Verknüpfungen. Es ist jedoch eine statische Verknüpfung möglich, beispielsweise eine Korrelation.

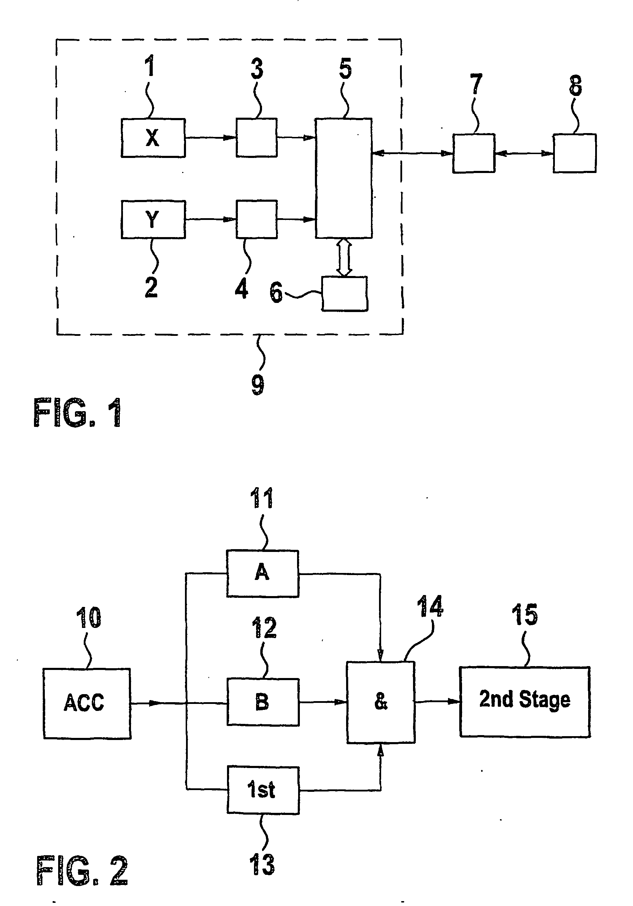

In Figur 1 ist als Blockschaltbild die erfindungsgemäße Vorrichtung zur Durchführung des erfindungsgemäßen Verfahrens zur Auslösung von wenigstens einem Airbag in einem Fahrzeug dargestellt. Ein Airbag-Steuergerät 9 weist einen Beschleunigungssensor 1 in Fahrrichtung, also X-Richtung, und einen Beschleunigungssensor 2 quer zur Fahrrichtung, also in Y-Richtung auf oder beide sind winklig zur Fahrrichtung eingebaut. Weiterhin weist das Steuergerät 9 die Signalverarbeitungen 3 und 4, einen Prozessor 5 und einen Speicher 6 auf. Der X-Beschleunigungssensor 1 ist an einen Eingang der Signalverarbeitung 3 angeschlossen. Die Signalverarbeitung 3 ist an einen ersten Dateneingang des Prozessors 5 angeschlossen.

Der Y-Beschleunigungssensor 2 ist an einen Eingang der Signalverarbeitung 4 angeschlossen. Die Signalverarbeitung 4 ist an einen zweiten Dateneingang des Prozessors 5 angeschlossen. Über einen ersten Daten-Ein/Ausgang ist der Prozessor 5 mit einem Speicher 6 verbunden. Über einen zweiten Daten-Ein/Ausgang ist der Prozessor 5 mit einer Ansteuerung 7 für Rückhaltemittel verbunden. Die Ansteuerung 7 ist über ihren zweiten Daten-Ein/Ausgang mit Rückhaltemittel 8, hier einem zweistufigen Airbag, verbunden.

Die Beschleunigungssensoren 1 und 2, die hier als mikromechanische Sensoren ausgebildet sind, liefern gemäss den ermittelten Fahrzeugbeschleunigungen Ausgangssignale, die durch eine auf den Sensoren 1 und 2 befindliche Elektronik gefiltert und verstärkt werden, um die Signale dann an die Signalverarbeitungen 3 und 4 jeweils zu übertragen. Die Signalverarbeitungen 3 und 4 weisen jeweils einen Analog-Digitalwandler auf und bereiten die dann digitalisierten Meßdaten für den Prozessor 5 vor. Gegebenenfalls wird hier eine Daten-Telegrammübertragung vorgenommen, die dann vom Prozessor 5 empfangen wird. Alternativ ist es möglich, dass die Signalverarbeitungen 3 und 4 jeweils den Sensoren 1 und 2 bzw. dem Prozessor 5 zugeordnet sind. Es ist hier weiterhin möglich, periphere Beschleunigungssensoren zu verwenden. Die Signale der peripheren Beschleunigungssensoren werden dann über Zweidraht- oder Busleitungen zu dem Steuergerät 9 übertragen, wobei dann Datentelegramme verwendet werden. Entsprechende Schnittstellenbausteine sind dann vorzusehen.

Der Prozessor 5 wertet die Beschleunigungssignale vom Beschleunigungssensor 1 und dem Beschleunigungssensor 2 aus, indem er zum einen die reinen Beschleunigungssignale und auch aufsummierte Beschleunigungssignale sowie auch doppelt integrierte Beschleunigungssignale verarbeitet. Für die erste Airbagstufe wird ein Kriterium verwendet, ob eine Auslösung erfolgen soll oder nicht. Für die zweite Stufe werden davon unabhängig zwei weitere Kriterien verwendet, die durch eine Und-Verknüpfung bestimmen, wann die Auslösung der zweiten Stufe erfolgt. Es liegen also letztlich drei Kriterien vor, die abgeprüft werden, um die zweite Stufe zu zünden, wobei das Kriterium für die erste Stufe unabhängig von der Überprüfung der zwei weiteren Kriterien berechnet wird. Als Kriterium für die erste Stufe wird hier das x-Beschleunigungssignal, also in Fahrrichtung, verwendet. Die zweite Stufe löst aber nur aus, wenn die erste Stufe bereits ausgelöst hat.

Als die Kriterien für die zweite Stufe werden zwei Signale verwendet, wobei auch ein Signal für beide Kriterien verwendbar ist. Wird beispielsweise der X-Integrator, also das integrierte Beschleunigungssignal in x-Richtung, als ein Kriterium im erfindungsgemäßen Verfahren verwendet, dann ist es möglich, den X-Integrator auch als zweites Kriterium einzusetzen. Da die Schwellwerte hier als Kennlinien ausgebildet sind, die sich also in Abhängigkeit von der Zeit verändern, werden bei der Verwendung des X-Integrators für beide Kriterien für die zweite Stufe unterschiedliche Kennlinien und damit unterschiedliche Schwellwerte verwendet. Entscheidend ist, dass beide Kriterien von den Signalen der Beschleunigungssensoren 1 und/oder 2 abgeleitet sind, wobei unter Ableitung auch die direkte Verwendung der Beschleunigungssignale verstanden wird.

Die Schwellwerte, die für Auslöseentscheidungen verwendet werden, sind im Speicher 6 abgespeichert, in dem auch Zeiten und Zwischenergebnisse abgelegt werden. Die Zeiten bestimmen, wann ein Ereignis eingetreten ist. Liegt also beispielsweise eine Auslöseentscheidung vor oder nicht.

Das Steuergerät 9 kommuniziert mit der Ansteuerung 7, um Diagnosedaten von den Rückhaltemittel 8 zu erhalten, so dass festgestellt werden kann, ob die Rückhaltemittel 8 betriebsbereit sind. Dies betrifft insbesondere die Funktionsfähigkeit von Zündmitteln, das sind Zündpillen, die durch Widerstandsmessungen überwacht werden. Es werden weiterhin Auslösebefehle von dem Prozessor 5 an die Ansteuerung 7 übertragen, so dass dann die Rückhaltemittel 8, also der zweistufige Airbag, gezündet werden können. Dazu wird mit einem Zündstrom die Zündpille gezündet.

In Figur 2 ist als ein Blockdiagramm das erfindungsgemäße Verfahren dargestellt. Im Block 10 Acc werden die von Beschleunigungssensoren abgeleiteten Kriterien ermittelt und an weitere Auswerteblöcke 11, 12 und 13 weitergegeben. Im Block 11 wird das Kriterium A, beispielsweise das X-Beschleunigssignal, ausgewertet. Im Block 12 B wird das zweite Kriterium, beispielsweise das aufsummierte X-Beschleunigungssignal, ausgewertet. Im Block 13 wird anhand des X-Beschleunigungssignals entschieden, ob die erste Stufe des Airbags zu zünden ist, ob also überhaupt ein Einsatz von den Rückhaltemitteln notwendig ist. Auch dies wird durch einen Schwellwert-Vergleich ermittelt. Hier läuft also der Basisalgorithmus ab. Im Block 14 wird eine logische UND-Verknüpfung der Kriterien A und B vorgenommen sowie eine Überprüfung, ob die erste Airbag-Stufe gezündet wurde. Sind die Kriterien A und B innerhalb einer bestimmten Zeit erfüllt, sowie die erste Stufe gezündet, dann wird auch die zweite Stufe, Second Stage, in Block 15 gezündet. Letztlich wurden also drei Kriterien für die zweite Stufe überprüft.

Entscheidend ist also, dass zwei Kriterien erfüllt sein müssen, um die zweite Stufe innnerhalb einer vorgegebenen Zeit nach der 1.-ten Stufe zu zünden. Beide Kriterien werden von den Beschleunigungssignalen abgeleitet. Unabhängig von der Erfüllung der Kriterien löst die 2.-te Stufe aus, wenn die 1.-te Stufe ausgelöst hat. Entscheidend ist die zeitliche Abfolge der Auslösung der 2.-ten Stufe nach der ersten Stufe.

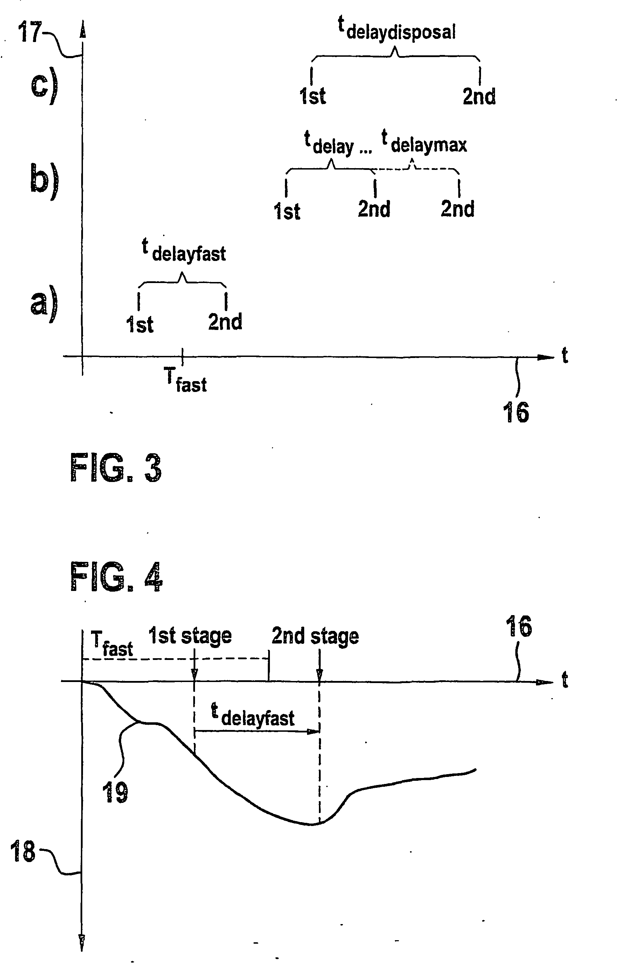

In Figur 3 sind drei verschiedene Auslöseszenarien dargestellt. Im Auslöseszenario A hat es sich ergeben, dass innerhalb einer im Speicher 6 abgespeicherten Unfallschwerezeit die erste Stufe ausgelöst hat. Daher wird die zweite Stufe des Airbags nach einer minimalen Verzögerungszeit t_{DelayFast} gezündet. In einem solchen Fall, da ein schwerer Unfall vorliegt, führt das hohe Beschleunigungssignal zur Auslösung der ersten Airbagstufe. Daher ist es notwendig, dass in einem solchen Fall der Airbag mit minimaler Verzögerung die zweite Stufe zündet, um einen optimalen Schutz des jeweiligen Insassen zu gewährleisten. Die Erfüllung der Kriterien wird in diesem Fall nicht abgewartet.

Der Einsatz des Airbags ist natürlich auch in Abhängigkeit von der jeweiligen Person zu sehen. Durch Insassenklassifizierungssysteme wird dafür gesorgt, dass der Airbag nicht selbst Ursache von Verletzungen von Fahrzeuginsassen ist. Beispielsweise wird auf einen Airbageinsatz bei Kindern verzichtet, wenn mit Kopfverletzungen zu rechnen ist.

Das Szenario B zeigt an, dass nach dem Zünden der ersten Stufe die zweite Stufe nach einem Zeitfenster von t_{Delay} bis t_{DelayMax} zündbar ist. Dies ist besonders bei mittelschweren Unfällen von Interesse. Bei leichten Unfällen wird das Szenario C verwendet, dann wird die zweite Stufe nach der maximalen Zeit, der Restzündungszeit t_{delaydisposal} gezündet, so dass die Wirkung des zweistufigen Airbags minimal ist.

Im folgenden werden Geschwindigkeits-Zeit-Diagramme dargestellt, also der X-Integrator. Der Einfachheit halber wird nur ein Kriterium für die zweite Stufe dargestellt, wobei vorausgesetzt wird, dass die erste Stufe durch Auswertung eines gesonderten Kriterium ausgelöst wurde und dass zweite Kriterium für die zweite Stufe sich so verhält wie das erste Kriterium für die zweite Stufe.

In Figur 4 ist in einem ersten Geschwindigkeits-Zeit-Diagramm, wobei auf der Zeitachse die Integrationszeit 16 angezeigt wird, das Szenario A dargestellt: Der X-Integrator des Basisalgorithmus überschreitet die Auslöseschwelle innerhalb von T_{fast}, wobei die erste Airbagstufe gezündet wird. Damit wird die zweite Airbagstufe nach der entsprechenden verzögerungszeit T_{delayfast} ausgelöst.

Figur 4 zeigt also das X-Integratorsignal 18 in Abhängigkeit von der Zeit 16. Die Kurve 19 beschreibt dieses Signal. Hier ist der Fall dargestellt, dass die zweite Stufe Second Stage nach einer minimalen Zeit t_{delayfast} nach dem Zünden der ersten Stufe First Stage gezündet wird. Dies hängt daran, dass innerhalb der Zeit t_{fast} die erste Stufe ausgelöst hat. Es liegt hier also ein schwerer Unfall vor, da es in sehr kurzer Zeit zu hohen Beschleunigungen kam.

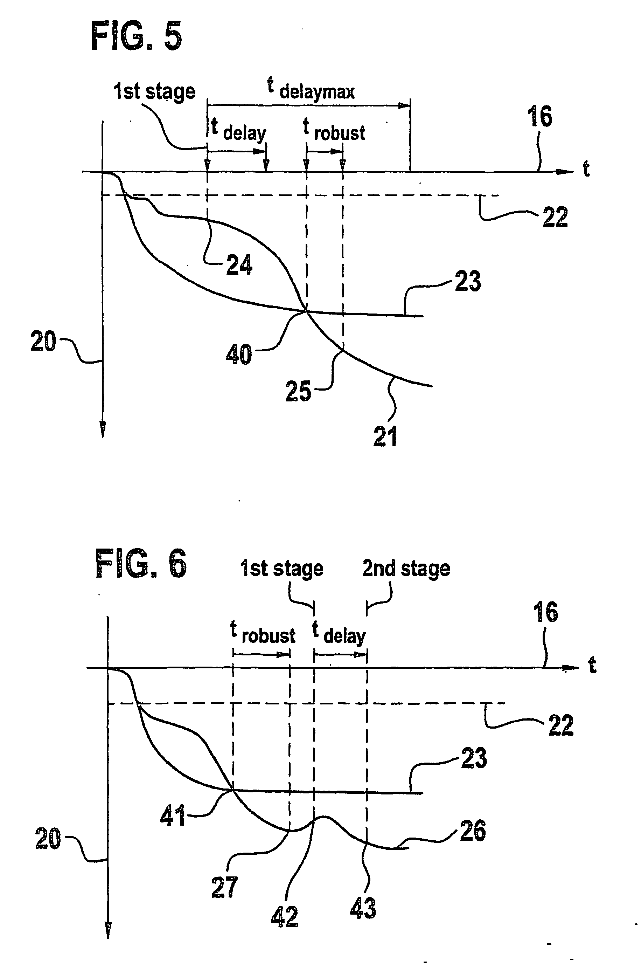

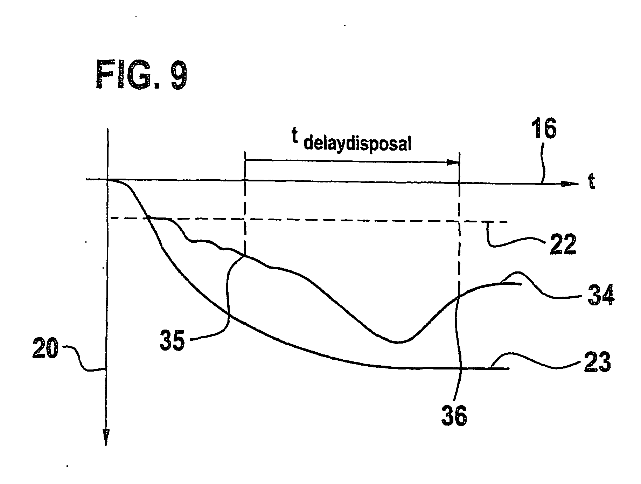

Figur 5 zeigt ein zweites Geschwindigkeits-Zeit-Diagramm, das veranschaulicht, wie ein Kriterium, also beispielsweise der absolute X-Integrator für die zweite Stufe nach dem Zünden der ersten Stufe erfüllt wird. Die Abszisse 16 beschreibt die Integrationszeit, während die Ordinate 20 die Geschwindigkeit, also das integrierte Beschleunigungssignal angibt. Wird die Schwelle 22, eine Rauschschwelle vom Integrator des Basisalgorithmus überschritten, dann wird der Schwellwert 23, der hier als Kennlinie ausgebildet ist, gestartet. Zum Zeitpunkt 24 erfolgt die Zündung der ersten Stufe durch den Basisalgorithmus. Nach diesem Zünden ist eine Pause von t_{delay} einzuhalten, um eine Zerstörung der Zündpille zu vermeiden. Zum Zeitpunkt 40 überschreitet das Kriterium 21 den Schwellwert 23. D.h. ab jetzt wird das Kriterium erfüllt. Da jedoch vorgegeben ist, dass dieses Kriterium andauernd mindestens für die Zeit t_{robust} eingehalten werden muss, dass also das Signal 21 über dem Schwellwert 23 liegt, ist es erst zum Zeitpunkt 25 entschieden, dass das Kriterium endgültig erfüllt ist. Zu diesem Zeitpunkt 25 wird dann die zweite Stufe des Airbags gezündet, wenn das nicht dargestellte weitere Kriterium, das entsprechend dem dargestellten Kriterium behandelt wird, bis zu diesem Zeitpunkt ebenfalls erfüllt ist. Bis zur Zeit t_{delay max} ist es möglich, die zweite Stufe auf diese Weise zu zünden. Würde die Kurve 21 erst nach der Zeit t_{delay max} für die Zeit t_{robust} über dem Schwellwert 23 liegen, dann wird die zweite Stufe erst mit der Restzündungszeit t_{delay} disposal gezündet (siehe in Fig. 8, Zeitpunkt 32).

In Figur 6 ist ein drittes Geschwindigkeits-Zeit-Diagramm dargestellt. Abszisse, Ordinate und der Schwellwert 22 sowie der Schwellwert 23 sind wie in Figur 5. Hier wird nun der Fall dargestellt, dass ein Kriterium für die zweite Stufe erfüllt ist, bevor die erste Stufe gezündet wurde. Dann wird folglich die zweite Stufe nach der minimalen Zeit t_{delay} gezündet. Voraussetzung ist, dass auch das weitere Kriterium entsprechend frühzeitig vorliegt. Kriterium 26 übertrifft zum Zeitpunkt 41 den Schwellwert 23. Der Schwellwert ist für die Zeit t_{robust} über diesem Schwellwert 23. Daher wird dann zum Zeitpunkt 27, nachdem die Zeit t_{robust} abgelaufen ist, von dem Prozessor 5 erkannt und abgespeichert, dass das Kriterium auch erfüllt ist. Dies wird dann im Speicher 4 als ein Triggerflag gesetzt. Die erste Stufe des Airbags wird nun zum Zeitpunkt 42 gezündet. Zum Zeitpunkt 43 ist die Zeit t_{delay} die minimale Zeit, nach der die zweite Stufe gezündet werden darf, abgelaufen und nun wird auch die zweite Stufe, Second Stage, gezündet.

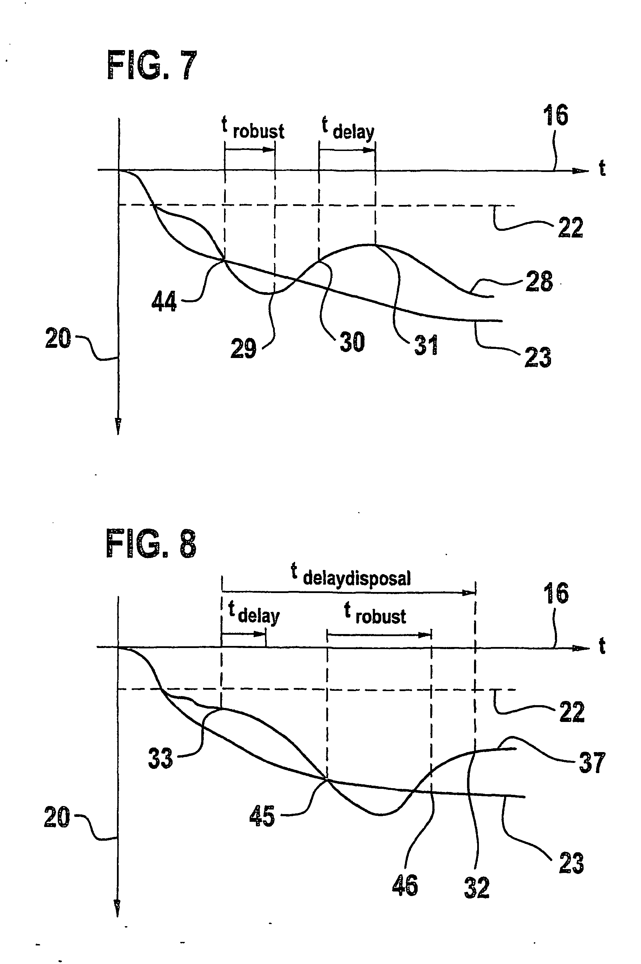

In Figur 7 wird ein viertes Geschwindigkeits-Zeit-Diagramm dargestellt. Abszisse und Ordinate sowie der Schwellwert 22 und der Schwellwert 23 sind wie vorher. Ein Kriterium 28 beschreibt nun das gemessene Signal. Zum Zeitpunkt 44 überschreitet das Meßsignal 28 den Schwellwert 23 zum ersten Mal. Zum Zeitpunkt 29 ist die Zeit t_{robust} abgelaufen, so dass dann erkannt wird, dass das Kriterium erfüllt wurde. Zum Zeitpunkt 30 wird nun die erste Stufe gezündet und nach der Zeit t_{delay} zum Zeitpunkt 31 wird die zweite Stufe gezündet. Und dies, obwohl sich nun die Kurve 28 unterhalb des Schwellwerts 23 befindet. Voraussetzung ist, dass das weitere Kriterium bis zu dem Zeitpunkt 31 erfüllt ist.

In Figur 8 wird ein fünftes Geschwindigkeits-Zeit-Diagramm dargestellt, bei dem wiederum Ordinate und Abszisse, Schwellwert 22 und Schwellwert 23 wie vorher verwendet werden. Die Kurve 37 beschreibt das Kriterium. Zum Zeitpunkt 33 wird die erste Stufe des Airbags gezündet. Ausgehend vom Zeitpunkt 33 wird die Zeit t_{delay} abgewartet, in der keine zweite Stufe gezündet werden darf. Zum Zeitpunkt 45 überschreitet das Meßsignal 37 den Schwellwert 23. Ausgehend vom Zeitpunkt 45 startet die Zeit t_{robust}, innerhalb derer jedoch das Meßsignal 37 wieder unter den Schwellwert 23 sinkt, so dass beim Ablauf der Zeit t_{robust} zum Zeitpunkt 46 festgestellt wird, dass das Kriterium nicht erfüllt wurde. Daher muss nun bis zum Ablauf der Restzündungszeit t_{delay disposal}, also bis zum Zeitpunkt 32 gewartet werden, um die zweite Stufe zu zünden. Die Restzündungszeit t_{delay disposal} ist die Zeit, zu der spätestens die zweite Stufe gezündet wird. Das ist unabhängig davon, ob das weitere Kriterium erfüllt ist oder nicht. Da das dargestellte Kriterium 37 nicht erfüllt ist, löst die zweite Stufe immer zum Zeitpunkt 32 aus.

In Figur 9 ist ein sechstes Geschwindigkeits-Zeit-Diagramm dargestellt, bei dem wiederum Abszisse und Ordinate, sowie die Schwellwerte 22 und 23 dieselben wie zuvor sind. Die Kurve 34 beschreibt ein Kriterium. Zum Zeitpunkt 35 wird die erste Stufe gezündet. Da nun jedoch die Kurve 34 zu keiner Zeit den Schwellwert 23 überschreitet, wird die zweite Stufe erst zum Zeitpunkt 36 nach dem Ablauf der maximalen Verzögerungszeit, der Restzündungszeit t_{delay disposal} gezündet. Das ist unabhängig davon, ob das weitere Kriterium erfüllt ist oder nicht. Da das dargestellte Kriterium 34 nicht erfüllt ist, löst die zweite Stufe immer zum Zeitpunkt 36 aus.

Es werden jeweils zwei Kriterien zur Auslösung der zweiten Airbagstufe herangezogen. Diese Kriterien werden getrennt vom Basisalgorithmus gerechnet. Über den Basisalgorithmus wird lediglich die erste Airbagstufe ausgelöst. Die Entscheidung zur Auslösung der zweiten Airbagstufe hängt bei mittlerer und geringer Crashschwere von zwei Kriterien ab. Es sind auch mehr möglich. Die Kriterien können aus einem Kriterienpool frei gewählt und kombiniert werden. Als Kriterien kommen in Betracht der X-Integrator des Beschleunigungssignals. Es ist jedoch möglich, hier auch andere Parameter zu verwenden. Dazu zählt der Y-Integrator, eine Kombination aus X- und Y-Integrator oder ein Doppelintegral des Y-Integrators. Dabei kann auch das erste Kriterium, das für den Basis-Auslöse-Algorithmus zur Auslösung der Rückhaltemittel verwendet wird, der X-Integrator sein. Bei der Integration ist es möglich, dass dies nur in einem Fenster betrachtet wird oder, dass dies nur vom betragsmäßigen Geschwindigkeitssignal genommen wird oder, dass dies vom reinen Geschwindigkeitssignal, also klassisch, verwendet wird. Dies gilt auch, wenn die Sensoren beispielsweise winklig zur Fahrrichtung angebracht sind. Bei hoher Crashschwere, d.h. wenn die erste Airbagstufe innerhalb der Crashschwerezeit Tfast auslöst, wird die zweite Airbagstufe nach Tdfast ausgelöst, unabhängig davon, ob die Kriterien für die zweite Stufe bereits erfüllt sind.

## Patentansprüche

1. Verfahren zur Auslösung von wenigstens einem Airbag (8) in einem Fahrzeug, wobei der wenigstens eine Airbag (8) mit wenigstens zwei Stufen eingesetzt wird, wobei ein im Fahrzeug zentral angeordnetes Airbag-Steuergerät (9) wenigstens einen Beschleunigungssensor (1, 2) zur Erfassung der Fahrzeugbeschleunigung verwendet, wobei die Auslösung der zweiten Stufe des wenigstens einen Airbags (8) in Abhängigkeit von einer Verknüpfung von wenigstens zwei von dem wenigstens einen Beschleunigungssensor (1, 2) abgeleitete Kriterien erfolgt, wobei die Auslösung der zweiten Stufe erfolgt, sofern die wenigstens zwei Kriterien jeweils über vorgegebenen Schwellwerten innerhalb jeweiliger vorgegebener Zeiten liegen, **dadurch gekennzeichnet, dass**, wenn wenigstens ein Kriterium den jeweiligen Schwellwert (23) in der jeweiligen Zeit nicht erreicht, dann die zweite Stufe nach einer Restzündungszeit (t_{delay disposal}) nach dem Zünden der ersten Stufe gezündet wird.

2. Verfahren nach Anspruch 1, **dadurch gekennzeichnet, dass** die Kriterien in Abhängigkeit vom Fahrzeugtyp gewählt werden.

3. Verfahren nach Anspruch 1 oder 2, **dadurch gekennzeichnet, dass** die Kriterien aus folgenden Parametern ausgewählt werden: Beschleunigung in Fahrrichtung, summierte Beschleunigung in Fahrrichtung, summierter Betrag der Beschleunigung in Fahrrichtung, summierte Beschleunigung in Fahrrichtung in einem vorgegebenen Zeitfenster, Beschleunigung quer zur Fahrtrichtung, Summe aus der summierten Beschleunigung in und quer zur Fahrrichtung, doppelt integrierte Beschleunigung quer zur Fahrrichtung, winklig zur Fahrrichtung ermittelte Beschleunigung.

4. Verfahren nach einem der vorhergehenden Ansprüche, **dadurch gekennzeichnet, dass** als Schwellwerte jeweils eine zeitabhängige Kennlinie (23) verwendet wird.

5. Verfahren nach einem der vorhergehenden Ansprüche, **dadurch gekennzeichnet, dass** wenn ein jeweiliges Kriterium für eine vorgegebene Entscheidungszeit (t_{robust}) über dem jeweiligen Schwellwert (23) liegt, auf ein Überschreiten des jeweiligen Schwellwerts (23) durch das jeweilige Kriterium erkannt wird.

6. Verfahren nach einem der vorhergehenden Ansprüche, **dadurch gekennzeichnet, dass** die Kennlinien in Abhängigkeit vor einer Verwendung eines Gurtes verändert werden.

7. Verwendung einer Vorrichtung zur Durchführung des Verfahrens nach einem der Ansprüche 1 bis 5, **dadurch gekennzeichnet, dass** die Vorrichtung wenigstens einen Beschleunigungssensor (1, 2) zur Aufpralldetektion, einen Prozessor (5), einen Speicher (6) und wenigstens einen Airbag (8), der in wenigstens zwei Stufen schaltbar ist, aufweist.

8. Verwendung einer Vorrichtung nach Anspruch 7, **dadurch gekennzeichnet, dass** der Prozessor (5), der Speicher (6) und der wenigstens eine Beschleunigungssensor (1, 2) in einem Airbag-Steuergerät (9) untergebracht sind.

9. Verwendung einer Vorrichtung nach Anspruch 8, **dadurch gekennzeichnet, dass** das Airbagsteuergerät (9) mit ausgelagerten Beschleunigungssensoren verbindbar ist.

## Claims

1. Method for triggering at least one air bag (8) in a vehicle, the at least one air bag (8) being used in at least two stages, an air bag control unit (9) arranged centrally in the vehicle using at least one acceleration sensor (1, 2) to detect the vehicle acceleration, the triggering of the second stage of the at least one air bag (8) being performed as a function of a combination of at least two criteria derived by the at least one acceleration sensor (1, 2), the triggering of the second stage being performed if the at least two criteria are respectively above prescribed threshold values within respectively prescribed times, **characterized in that** when at least one criterion does not reach the respective threshold value (23) in the respective time the second stage is fired following a residual firing time (t_{delay disposal}) after the firing of the first stage.

2. Method according to Claim 1, **characterized in that** the criteria are selected as a function of the type of vehicle.

3. Method according to Claim 1 or 2, **characterized in that** the criteria are selected from the following parameters: acceleration in the direction of travel, summed acceleration in the direction of travel, summed amount of the acceleration in the direction of travel, summed acceleration in the direction of travel in a prescribed time window, acceleration transverse to the direction of travel, sum of the summed acceleration in and transverse to the direction of travel, doubly integrated acceleration transverse to the direction of travel, acceleration determined at an angle to the direction of travel.

4. Method according to one of the preceding claims, **characterized in that** a time-dependent characteristic curve (23) is used in each case as threshold values.

5. Method according to one of the preceding claims, **characterized in that** when a respective criterion for a prescribed decision time (t_{robust}) is above the respective threshold value (23) and overshooting of the respective threshold value (23) is detected by the respective criterion.

6. Method according to one of the preceding claims, **characterized in that** the characteristic curves are varied as a function of a use of a belt.

7. Use of a device for carrying out the methods according to one of Claims 1 to 5, **characterized in that** the device has at least one acceleration sensor (1, 2) for impact detection, a processor (5), a memory (6) and at least one air bag (8) which can be switched into at least two stages.

8. Use of a device according to Claim 7, **characterized in that** the processor (5), the memory (6) and the at least one acceleration sensor (1, 2) are accommodated in an air bag control unit (9).

9. Use of a device according to Claim 8, **characterized in that** the air bag control unit (9) can be connected to acceleration sensors located outside.

## Revendications

1. Procédé de déclenchement d'au moins un coussin gonflable (8) dans un véhicule, l'au moins un coussin gonflable (8) étant utilisé avec au moins deux niveaux, selon lequel un appareil de commande de coussin gonflable (9) disposé de façon centrale dans le véhicule utilise au moins un capteur d'accélération (1, 2) pour enregistrer l'accélération du véhicule, le déclenchement du deuxième niveau de l'au moins un coussin gonflable (8) s'effectue en fonction d'une association d'au moins deux critères dérivés d'au moins un capteur d'accélération (1, 2), le déclenchement du deuxième niveau s'effectuant si au moins deux critères se trouvent respectivement au-dessus de valeurs de seuil prédéterminées dans des temps respectifs prédéterminés,
**caractérisé en ce que**
lorsqu'au moins un critère n'atteint pas la valeur de seuil respective (23) dans le temps respectif, le deuxième niveau est déclenché après un temps de déclenchement résiduel (t_{retard}) après le déclenchement du premier niveau.

2. Procédé selon la revendication 1,
**caractérisé en ce que**
les critères sont sélectionnés en fonction du type de véhicule.

3. Procédé selon la revendication 1 ou 2,
**caractérisé en ce que**
les critères sont sélectionnés à partir des paramètres suivants : accélération dans la direction de conduite, accélération totale dans la direction de conduite, valeur totale de l'accélération dans la direction de conduite, accélération totale dans la direction de conduite dans un intervalle de temps prédéterminé, accélération transversale à la direction de conduite, somme de l'accélération totale dans la direction de conduite et transversale à celle-ci, double intégrale de l'accélération transversale à la direction de conduite, accélération selon un certain angle par rapport à la direction de conduite.

4. Procédé selon l'une des revendications précédentes,
**caractérisé en ce que**
comme valeurs de seuil l'on utilise respectivement une caractéristique (23) en fonction du temps.

5. Procédé selon l'une des revendications précédentes,
**caractérisé en ce que**
lorsqu'un critère respectif pour un temps de décision prédéterminé (tᵥᵢₒₗₑₙₜ) est supérieur à la valeur de seuil respective (23), on détecte un dépassement de la valeur de seuil respective (23) par le critère respectif.

6. Procédé selon l'une des revendications précédentes,
**caractérisé en ce que**
les caractéristiques sont modifiées en fonction de l'utilisation d'une ceinture de sécurité.

7. Utilisation d'un dispositif permettant de mettre en oeuvre le procédé selon l'une des revendications 1 à 5,
**caractérisée en ce que**
le dispositif présente au moins un capteur d'accélération (1, 2) pour la détection des chocs, un processeur (5), une mémoire (6) et au moins un coussin gonflable (8) pouvant être activé selon au moins deux niveaux.

8. Utilisation d'un dispositif selon la revendication 7,
**caractérisée en ce que**
le processeur (5), la mémoire (6) et l'au moins un capteur d'accélération (1, 2) sont intégrés dans un appareil de commande des coussins gonflables (9).

9. Utilisation d'un dispositif selon la revendication 8,
**caractérisée en ce que**
l'appareil de commande des coussins gonflables (9) peut être relié à des capteurs d'accélération extérieurs.
